# EUROPEAN PATENT APPLICATION

(11) **EP 3 495 336 A1**
(43) Date of publication of application: **12.06.2019**
(21) Application number: 19153473.4
(22) Date of filing: 20.02.2015
(51) Int. Cl.: C04B 28/04, C04B 28/14, C09D 1/08

(54) **A COMPOSITION AND METHOD OF USING PERLITE**

(30) Priority: 24.02.2014 IL 23113514
(62) Divisional of application: 15155889.7
(71) Applicant: Shahal Building Materials Ltd., 8310102 Beer Tovia (IL)
(72) Inventor: Bar Moav, David, 7550508 Rishon Letzion (IL)
(74) Representative: Hoffmann Eitle

(57) **Abstract**

The present invention relates to a composition and method of using perlite. The composition is a powder adhesive composition comprising: cement; a dispersible polymer powder; wherein at least 10% volume of the powder adhesive is an expanded perlite. The method of producing a powder adhesive composition comprises the steps of: mixing an expanded perlite, cement, and a dispersible polymer powder in any order; wherein at least 10% volume of the powder adhesive is the expanded perlite.

## Description

### Technical Field

The present invention relates to the use of compositions containing expanded perlite. More particularly, the present invention relates to the use of compositions of expanded perlite for the construction industry.

### Background

Volcanic glass, such as perlite, forms when molten rock, i.e. lava, pours out of a volcano and cools rapidly, therefore, there is no time for crystals to form or for water to escape. Instead, the lava hardens immediately, into a material which contains 2-5% water.

Perlite is known in industry in two forms: crude and expanded. Crude perlite is prepared by the crushing and screening of perlite into various size fractions. Expanded perlite is perlite after it has been heated. When heated, it can expand to as much as twenty times its original volume. This expansion is the result of heated water: when the glassy lava rock is heated to 890° C, the water molecules trapped in the rock turn into vapor which causes the rock to expand, similarly as the water in popcorn cause the kernel to pop when it is heated. It is the presence of these trapped water molecules which accounts for the physical properties of expanded perlite.

Expanded perlite can be manufactured to weigh between 32-240 kg/m³, making it adaptable for numerous applications in the construction, industrial, chemical, horticultural and petrochemical industries.

US 7,736,574 discloses a method for the production of perlite products such as sheets, panels or bricks. The disclosed method involves first providing a quantity of expanded perlite and treating the perlite by applying a cement binder thereto, so as to at least partially encapsulate the perlite with binder. Thereafter, an amount of cement is added to the binder-treated perlite and a mixture is created. The described mixture is then formed and allowed to harden to yield solid articles. Nevertheless, the disclosed method is used for yielding perlite based solid articles.

It would therefore be desired to propose a system void of these deficiencies.

### Summary

It is an object of the present invention to provide a light weight composition for use in the construction industry.

It is another object of the present invention to provide a light weight adhesive, for attaching any natural or synthetic stone veneer.

It is still another object of the present invention to provide an ecological adhesive for gluing stone tiles, which has a long open time.

It is still another object of the present invention to provide an adhesive or plaster which has improved thermal and acoustic insulating properties.

Other objects and advantages of the invention will become apparent as the description proceeds.

The present invention relates to a powder adhesive composition, which comprises: cement; a dispersible polymer powder; and at least 30% volume of the powder adhesive is an expanded perlite.

Preferably, the composition further comprises a cellulose ethers compound,

Preferably, the composition further comprises a fiber compound.

Preferably, the cement is white cement.

In one embodiment, the cement is Portland cement.

In one embodiment, the composition further comprises an accelerator.

Preferably, the expanded perlite comprises at least 1% of the total mass of the composition.

Preferably, the cellulose ethers compound is Mecellose FMC 21010.

Preferably, the dispersible polymer powder is Wacker's Vinnapas 5025L.

Preferably, the fiber compound is a polypropylene compound.

Preferably, the adhesive composition is used for gluing a tile.

Preferably, the adhesive composition is used for gluing a stone tile.

The present invention also relates to a method of producing a powder adhesive comprising the steps of: mixing expanded perlite, cement, and a dispersible polymer powder, in any order; wherein at least 30% volume of the sand-free powder adhesive is the expanded perlite.

The present invention also relates to a powder adhesive composition which comprises: gypsum; a retarder; a dispersible polymer powder; and wherein at least 30% volume of the powder adhesive is an expanded perlite.

Preferably, the retarder is HYCON R 7200.

### Detailed Description

Prior art stone veneer powder adhesives, such as Sika Ceram-202, manufactured by Sika AG of Switzerland, or Mr. Fix 116 manufactured by Carmit Mr. Fix Ltd., for gluing ceramic tiles, typically has a density of more than 1400 kg/m³. The heavy weight of these prior art adhesives is due, inter alia, to the weight of the sand in the adhesive. The heavy weight of these prior art adhesives is costly in terms of transportation and problematic in terms of handling, e.g. manual carrying. Furthermore, if the sand is not dried properly, before it is mixed into the adhesive, some of the adhesive's polymers can be ruined, effectively weakening the adhesive.

In a first embodiment, a composition is proposed, for use in the construction industry, which uses expanded perlite. Unlike conventional adhesive compositions having sand as aggregate; in this embodiment the volume of sand is substituted with an equal or equivalent volume of expanded perlite. The composition, which comprises expanded perlite, may be used for creating an adhesive, plaster, or any kind of material that hardens on drying and may be used for indoors and/or outdoors gluing on and/or coating walls, ceilings, floors, or for any other construction use. For example, the composition may be used as a powder adhesive, when mixed with water it can be used for gluing natural or synthetic stone tiles to a wall. Thus, for example, a powder adhesive composition for a stone veneer, which uses expanded perlite instead of sand, may have a density of approximately 500 kg/m³, which results in a lighter weight, for the same volume, compared to a typical prior art powder adhesive that may have a density of more than 1400 kg/m3. The advantages of using expanded perlite instead of sand in powder adhesives or plaster in terms of improving the thermal and/or acoustic insulation properties of the adhesive and/or plaster due to the expanded perlite's improved thermal and/or acoustic insulation properties are discussed further in relations to Table 1. The composition, which comprises expanded perlite, may have different consistencies such as powder, granular, cream, etc. The composition, which comprises expanded perlite, may be stored in sacks, bags, buckets, or any other known container. In one example, the expanded perlite may comprise at least 70% of the total volume of the composition. In another example, the expanded perlite may comprise at least 80% of the total volume of the composition. In yet another example, the expanded perlite may comprise at least 90% of the total volume of the composition. In yet another example, the expanded perlite may comprise at least 10% of the total volume of the composition. In yet another example, the expanded perlite may comprise at least 30% of the total volume of the composition.

In a second embodiment expanded vermiculite may be used instead of expanded perlite. Vermiculite is a hydrous silicate mineral that is classified as a phyllosilicate and that expands greatly when heated. Vermiculite may be formed by weathering or hydrothermal alteration of biotite or phlogopite.

In one a third embodiment, a powder, light weight, stone veneer adhesive has expanded perlite in at least 70 volume percent of adhesive; cellulose ether compounds at a ratio of between 7-15% of the mass of the expanded perlite; a dispersible polymer at a ratio of between 17%-180% of the mass of the expanded perlite; a fiber compound at a ratio of between 0.9-1.1% of the mass of the expanded perlite; an accelerator at a ratio of between 5-15% of the mass of the expanded perlite; and, optionally, cement at a ratio of between 600%-900% of the mass of the expanded perlite. The components of the instant adhesive can be mixed together in any order to obtain the desired adhesion strength.

In a fourth embodiment, a powder, light weight, stone veneer adhesive has expanded perlite in at least 10 volume percent of adhesive; cellulose ether compounds at a ratio of between 30-40% of the mass of the expanded perlite; a dispersible polymer at a ratio of between 10-300% of the mass of the expanded perlite; a fiber compound at a ratio of between 0.6-0.9% of the mass of the expanded perlite; an accelerator at a ratio of between 5-15% of the mass of the expanded perlite; and, optionally, cement at a ratio of between 800-950% of the mass of the expanded perlite. The components of the instant adhesive can be mixed together in any order to obtain the desired adhesion strength.

With or without cement, the described adhesive may be mixed with water for creating a glue having cream like texture, which hardens on drying. Due to the expanded perlite's intrinsic characteristics, water may be added to the powder adhesive composition in the mass ratio of approximately 0.9:1, for example, meaning, that approximately 0.9 liter of water may be added for each 1 kg of powder. In another example, water may be added to the powder adhesive composition in the mass ratio of approximately 0.8:1. In yet another example, water may be added to the powder adhesive composition in the mass ratio of approximately 0.7:1. In yet another example, water may be added to the powder adhesive composition in the mass ratio of approximately 0.6:1. In yet another example, water may be added to the powder adhesive composition in the mass ratio of approximately 1.2:1. Alternatively, water can be added to the powder adhesive composition in the ratio of between 60-120% of the mass of the powder adhesive composition. The ration of water added to the adhesive powder may also be a function of the specific ingredients of the adhesive powder. The adhesive, with cement, may be used for gluing any stone tiles as a protective and/or decorative covering for exterior or interior horizontal or vertical surfaces.

The composition, comprising expanded perlite, may be used for creating a lightweight powder veneer adhesive. The term veneer is meant to include any protective or ornamental facing which can be glued to any horizontal or vertical surface. The adhesive may be used for gluing stone such as granite porcelain, ceramic, mosaic, porcelain, marble, brick, or any other synthetic or natural stone to a wall, ceiling, floor or any other surface. The powder adhesive may be mixed with water for creating a glue having cream like texture, which hardens on drying. The glue may be used for gluing any stone tiles as a protective and/or decorative covering for exterior or interior horizontal or vertical surfaces. In one embodiment, the powder adhesive composition, for attaching stone veneer, comprises at least 9% of expanded perlite of its total mass. In another embodiment, the powder adhesive composition, for attaching stone veneer, comprises at least 1% of expanded perlite of its total mass. In yet another embodiment, the powder adhesive composition, for attaching stone veneer, may comprise at least 3% of expanded perlite of its total mass. In yet another embodiment, the powder adhesive composition, for attaching stone veneer, may comprise at least 6% of expanded perlite of its total mass.

In one embodiment the adhesive composition, for attaching veneer, may comprise, in addition to the expanded perlite, a cellulose ethers compound. Preferably, the cellulose ethers compound may be Mecellose FMC 21010 manufactured by Samsung Chemical, which may be added to the adhesive composition at a ratio of between 7-15% of the mass of the expanded perlite, for example. In another example, the cellulose ethers compound may be added to the adhesive composition at a ratio of between 4%-24% of the mass of the expanded perlite. Alternatively, the cellulose ethers compound may be Methocel, which is water-soluble methylcellulose and has hydroxypropyl methylcellulose polymers, or any other cellulose ether that is made for use with cement. In one embodiment the cellulose ethers compound may be added to the adhesive composition at a ratio of between 30-40% of the mass of the expanded perlite. The cellulose ethers compound may be used to enhance some of the qualities of the adhesive composition such as providing workable quality to the composition and/or extending the open time of the composition, and/or improving the water saturation of the composition, where open time is the time after the adhesive is applied during which a serviceable bond can be made.

In one embodiment the adhesive composition for attaching veneer may also comprise a dispersible polymer. The dispersible polymer may be Wacker's Vinnapas 5025L, which is a leveling dispersible powder based on vinyl acetate and ethylene, or any other hydroscopic compound which is dispersible in water, such as SBR-based adhesives, vinyl acetate, acryl, etc. Preferably, the dispersible polymer may be added to the adhesive composition at a ratio of between 17%-180% of the mass of the expanded perlite. In another embodiment the dispersible polymer may be added to the adhesive composition at a ratio of between 200-250% of the mass of the expanded perlite. In yet another embodiment, the dispersible polymer may be added to the adhesive composition at a ratio of between 5-300% of the mass of the expanded perlite.

In one embodiment the adhesive composition for attaching veneer may also comprise a fiber compound such as Adfil construction fibres or any other polypropylene compound having a fiber Length of 6mm or any other chemical or synthetic fiber compound which may be used for cement based adhesives, or any other fiber that is used with cement such as nylon fiber. Preferably, the fiber compound may be added to the adhesive composition at a ratio of between 0.9-1.1% of the mass of the expanded perlite. Alternatively, the fiber compound may be added to the adhesive composition at a ratio of between 0.6-0.9% of the mass of the expanded perlite.

In one embodiment the adhesive composition for attaching veneer may also comprise cement such as white cement, Portland cement, or any type of cement or aluminous cement. Preferably, the cement may be added to the adhesive composition at a ratio of between 600-900% of the mass of the expanded perlite. In another embodiment, the cement may be added to the adhesive composition at a ratio of between 800-950% of the mass of the expanded perlite. In yet another embodiment, the cement may be added to the adhesive composition at a ratio of between 250-1700% of the mass of the expanded perlite. In yet another embodiment, the cement may be added to the adhesive composition at a ratio of between 350-900% of the mass of the expanded perlite. In yet another embodiment, the cement may be added to the adhesive composition at a ratio of between 350-1700% of the mass of the expanded perlite.

In one embodiment the adhesive composition, comprising expanded perlite, may be free of cement. The resulting adhesive composition free of cement may be a light weight adhesive used for indoors gluing. This adhesive may be sold as a cream adhesive.

In one embodiment the adhesive composition for attaching veneer may also comprise gypsum and a retarder such as HYCON R 7200, manufactured by BASF, instead of cement. In one embodiment the gypsum may be added to the adhesive composition at a ratio of between 600-900% of the mass of the expanded perlite, and the retarder may be added in relations to the desired open time.

In one embodiment the composition for creating an adhesive for attaching veneer may also comprise an additive for accelerating the bonding time of the adhesive, referred to hereinafter as accelerator. The accelerator may be Calcium Formate, Calcium Chloride, or any other additive that can be used for accelerating the bonding time of the adhesive. In one embodiment, the accelerator may be added to the adhesive composition at a ratio of between 5-15% of the mass of the expanded perlite.

In one embodiment, the expanded perlite and all the other ingredients, mentioned above, of the proposed composition, may be mixed together in any order.

In one embodiment, the powder adhesive composition may be mixed with water to create glue for gluing any synthetic or natural stone tile to any surface. In one embodiment, due to the expanded perlite's intrinsic characteristics, water may be added to the powder adhesive composition in the mass ratio of approximately 0.7:1, meaning that approximately 0.7-1 liter of water can be added for each 1 kg of powder. In another embodiment, water may be added to the powder adhesive composition in the mass ratio of approximately 1:1. In one embodiment, water may be added to the powder adhesive composition in the ratio of between 70-100% of the mass of the powder adhesive composition.

In another embodiment, water may be added to the powder adhesive composition in the mass ratio of approximately 0.6:1, meaning that approximately 0.6 liter of water can be added for each 1 kg of powder.

Alternatively, water may be added to the powder adhesive composition in the ratio of between 60-120% of the mass of the powder adhesive composition.

Preferably, the expanded perlite, used in the proposed adhesive composition, has a granular size of between 0-2 mm, where the preferred density of the expanded perlite is thus between 50-115 kg/m³. In another embodiment, the proposed adhesive composition comprises expanded perlite having a granular size of between 2-6 mm and having thus a density of between 40-50 kg/m³.

In one embodiment these may be the physical properties of the expanded perlite which may be used for creating a powder adhesive composition for attaching stone tiles:

**Table 1**

| | |
|---|---|
| **Spatial weight** | 40-115 kg/m³ |
| **Color** | White |
| **Refractive Index** | 1.4-1.5 |
| **Granular Size** | From fine powder to 6mm |
| **pH** | 7-8 |
| **Softening Point** | 890-1100°C |
| **Fusion Point** | 1280-1350°C |
| **Specific Heat** | 387 J/kg·K |
| **Thermal Conductivity** | 0.04 W/m·K |

In practice, the expanded perlite, used in the proposed composition, may be derived from different sources, and may have other physical properties.

The use of expanded perlite instead of sand in construction compositions may also benefit the environment as the perlite is a natural and ecological substance. The use of expanded perlite instead of sand in powder adhesives or plaster can also improve the thermal and/or acoustic insulation properties of the adhesive and/or plaster due to the expanded perlite's improved thermal and/or acoustic insulation properties.

### Examples

For the sake of enablement an example is set forth, for the third embodiment, with ingredients and their approximated amounts for creating a powder adhesive composition, which comprises expanded perlite, for attaching stone tiles:

**Table 2**

| | |
|---|---|
| **Perlite** | 850 g |
| **White Cement** | 7.38 Kg |
| **Methocel** | 100 g |
| **Vinaps 5025L** | 0.6 Kg |
| **poly propylene** | 10 g |

By mixing the exemplified ingredients and amounts, of table 2, it is possible to create a powder adhesive composition of about 9 kg. Water may be added to this powder adhesive composition before gluing the stone veneer. In this example at least 8 liters of water may be added to this composition for creating glue for gluing a stone veneer. In one embodiment, upon adding water to the adhesive composition the resulting glue may be used for gluing tiles to a surface after which the glue may be dried and the tiles may stay attached to the surface henceforth.

The mixing of the exemplified ingredients and amounts, of table 2 may create an adhesive which complies with the properties C2 TE S1 of any of the European standards: EN 1346 (2007), EN 1308 (2007), EN 1347 (2007), EN 1348 (2007), or EN 12002 (2008).

Lab tests of the above disclosed example powder adhesive composition reveal the following characteristics of the composition:

**Table 3**

| | |
|---|---|
| **Density (wet)** | 1000 kg/m³ |
| **Preferred Water to powder relation** | 0.9 liter water for 1 kg powder |
| **Effective work time** | 90 minutes |
| **Open time** | 30 minutes |
| **Cover capability** | 2.6 Kg/m² for 5mm thickness |
| **adhesion strength after 28 days** | 1.2 megapascal MPa |
| **Working temperature** | 5°C-35°C |

Thus, as shown in Table 3, the powder adhesive composition may weigh less than the typical prior art powder adhesive, which can reduce costs of transportation and handling. In addition, the use of expanded perlite instead of sand in powder adhesives may also prolong the open time of the adhesive, after the water is added, effectively making the perlite based adhesive more comfortable for use.

Lab tests of another example powder adhesive composition may reveal the following characteristics of the composition:

**Table 4**

| | |
|---|---|
| **Density** | 500 kg/m³ |
| **Preferred Water to powder relation** | 1 liter water for 1 kg powder |
| **Effective work time** | 90 minutes |
| **Open time** | 45 minutes |
| **Cover capability** | 2.6 Kg/m² for 5mm thickness |
| **adhesion strength after 28 days** | 1.5 megapascal MPa |
| **Working temperature** | 5°C-35°C |

In one embodiment, the described adhesives above may comply with any of the known adhesive properties such as: C1, C1 T, C1 TE, C1 TE S1, C1 TE S2, C2, C2 T, C2 TE, C2 TE S1, or C2 TE S2 of any of the European standards such as: EN 1346 (2007), EN 1308 (2007), EN 1347 (2007), EN 1348 (2007), or EN 12002 (2008).

While the above description discloses many embodiments and specifications of the invention, these were described by way of illustration and should not be construed as limitations on the scope of the invention. The described invention may be carried into practice with many modifications which are within the scope of the appended claims.

### EMBODIMENTS:

The following are embodiments of the invention.
1. A powder adhesive composition comprising:
   cement;
   a dispersible polymer powder; and
   at least 30% volume of the powder adhesive is an expanded perlite.
2. The composition according to embodiment 1, further comprising a cellulose ethers compound.
3. The composition according to embodiment 1, further comprising a fiber compound.
4. The composition according to embodiment 1, where the cement is white cement.
5. The composition according to embodiment 1, where the cement is Portland cement.
6. The composition according to embodiment 1, further comprising an accelerator.
7. The composition according to embodiment 2, where the cellulose ethers compound is Mecellose FMC 21010.
8. The composition according to embodiment 1, where the dispersible polymer powder is Wacker's Vinnapas 5025L.
9. The composition according to embodiment 3, where the fiber compound is a polypropylene compound.
10. A method of producing a powder adhesive composition comprising the steps of:
   mixing an expanded perlite, cement, and a dispersible polymer powder, in any order; wherein at least 30% volume of the sand-free powder adhesive is the expanded perlite.
11. The method according to embodiment 10, where the cement is white cement.
12. The method according to embodiment 10, where the cement is Portland cement.
13. The method according to embodiment 10, further comprising adding an accelerator.
14. The method according to embodiment 10, further comprising adding a cellulose ethers compound.
15. The method according to embodiment 10, further comprising adding a fiber compound.
16. The method according to embodiment 10, where the dispersible polymer powder is Wacker's Vinnapas 5025L.
17. The method according to embodiment 10, where the perlite comprises at least 1% of the total mass of the adhesive composition.
18. A powder adhesive composition comprising:
   gypsum;
   a retarder;
   a dispersible polymer powder; and
   at least 30% volume of the powder adhesive is an expanded perlite.
19. The composition according to embodiment 1, where the retarder is HYCON R 7200.

## Claims

1. A powder adhesive composition comprising:
cement;
a dispersible polymer powder; and
at least 10% volume of the powder adhesive is an expanded perlite.

2. The composition according to claim 1, further comprising a cellulose ethers compound, which is optionally present at a ratio of 4-24% or 30-40% of the mass of the expanded perlite.

3. The composition according to claim 1, further comprising a fiber compound, which is optionally present at a ratio of 0.6-0.9% or 0.9-1.1% of the mass of the expanded perlite.

4. The composition according to claim 1, where the cement is white cement.

5. The composition according to claim 1, where the cement is Portland cement.

6. The composition according to claim 1, further comprising an accelerator, which is optionally present at a ratio of 5-15% of the mass of the expanded perlite.

7. The composition according to claim 2, where the cellulose ethers compound is Mecellose FMC 21010.

8. The composition according to claim 1, where the dispersible polymer powder is Wacker's Vinnapas 5025L.

9. The composition according to claim 3, where the fiber compound is a polypropylene compound.

10. The composition according to claim 1, wherein the dispersible polymer is present at a ratio of 5-300% of the mass of the expanded perlite.

11. The composition according to claim 1, wherein the cement is present at a ratio of 250-1700% of the mass of the expanded perlite.

12. The composition according to claim 1, further comprising cellulose ether compounds at a ratio of between 30-40% of the mass of the expanded perlite;
wherein the dispersible polymer is present at a ratio of between 10-300% of the mass of the expanded perlite;
further comprising a fiber compound at a ratio of between 0.6-0.9% of the mass of the expanded perlite;
further comprising an accelerator at a ratio of between 5-15% of the mass of the expanded perlite; and
wherein the cement is present at a ratio of between 800-950% of the mass of the expanded perlite.

13. A method of producing a powder adhesive composition comprising the steps of:
mixing an expanded perlite, cement, and a dispersible polymer powder, in any order; wherein at least 10% volume of the powder adhesive is the expanded perlite.
